**Europäisches Patentamt**

**European Patent Office**

**Office européen des brevets**

(19)

(11) Veröffentlichungsnummer: **0 298 914 B1**

(12)

# EUROPÄISCHE PATENTSCHRIFT

(45) Veröffentlichungstag der Patentschrift:
30.10.91 Patentblatt 91/44

(51) Int. Cl.⁵: **B01D 1/18**

(21) Anmeldenummer: 88810431.2

(22) Anmeldetag: 23.06.88

(54) Sprühtrockner zur Herstellung von Pulvern, Agglomeraten oder dergleichen.

(30) Priorität: 03.07.87 CH 2537/87

(43) Veröffentlichungstag der Anmeldung:
11.01.89 Patentblatt 89/02

(45) Bekanntmachung des Hinweises auf die Patenterteilung:
30.10.91 Patentblatt 91/44

(84) Benannte Vertragsstaaten:
AT CH DE FR GB IT LI NL

(56) Entgegenhaltungen:
CH-A- 374 972
DE-C- 849 350
GB-A- 2 020 986
US-A- 1 426 030
US-A- 2 280 073
US-A- 3 963 559

(73) Patentinhaber: CIBA-GEIGY AG
Klybeckstrasse 141
CH-4002 Basel (CH)

(72) Erfinder: Millioud, Alain
Himmelrichweg 6 c
CH-4123 Allschwil (CH)

EP 0 298 914 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Sprühtrockner zur Herstellung von Pulvern, Agglomeraten oder dergleichen durch Trocknen von pumpfähigen Produkten gemäss Oberbegriff des Patentanspruches 1.

Derartige Sprühtrockner sind in unterschiedlichen Bauweisen als Scheiben-, Düsen- und Fluidisier-Sprühtrockner bekannt und werden auch als Agglomeratoren eingesetzt. Unterschiedliche Arbeits- und Bauweisen solcher Sprühtrockner sind beschrieben in Chem.-Ing.-Tech. 59 (1987) Nr. 2, Seite 112 bis Seite 117. Kurz zusammengefasst werden dabei drei Hauptvarianten von Sprühtrocknern beschrieben, nämlich Scheiben-Sprühtrockner mit drallförmiger Verteilung der als Trocknungsgas dienenden Heissluft, Düsen-Sprühtrockner mit und ohne drallförmige Verteilung des Trocknungsgases und schliesslich fluidisierte Sprühtrockner mit axialer Heissluft-Zufuhr von oben, Wirbelbett am Boden und Pulverrückführung in der als Turm ausgebildeten Trocknungskammer. In der Regel wird dabei das zu trocknende und zu versprühende Nassgut von oben her eingeführt. Dabei haben die Trocknungskammern zwei Hauptausgänge, nämlich den Produktaustrag für das Gutkorn oder Gutprodukt direkt an der Trocknungskammer oder seitlich aus dem integrierten Wirbelbett und die Abführleitung für das Trocknungsgas bzw. die Abluft, die dabei einen Feinanteil des Produktes mitnimmt. Der von dem abgeführten Trocknungsgas bzw. der Abluft mitgeführte Feingutanteil wird mittels Zyklonen und-/oder Filtern zurückgewonnen und kann vor allem in solchen Vorrichtungen, in denen eine Agglomerierung des Produktes durchgeführt werden kann, in die Trocknungskammer zurückgeführt oder aber auch separat weiterbehandelt werden.

Die Menge dieses Feingutanteiles hängt von verschiedenen Faktoren wie der Feinheit der Zerstäubung, den Eigenschaften des eigentlichen Produktes, dem Agglomerationseffekt und der Abscheidung innerhalb der Trocknungskammer ab.

In der Regel werden Produktformen verlangt, die nur sehr wenig Feingutanteil enthalten dürfen, um verlangte Korngrössen nicht zu unterschreiten und insbesondere nicht zu stark zu stäuben. Es kann sehr aufwendig sein, die anfallenden Feingutanteile so nachzubehandeln, dass sie wieder verwendbar sind.

Es wurden verschiedene Konstruktionen bekannt, mit denen die Ausbeute des Grobgutes verbessert und eine Mitnahme von zuviel Grobgut in der Abluft vermieden werden soll, gleichzeitig aber erreicht werden soll, dass nur eine möglichst kleine Menge Feinanteil in den Grobgutaustrag des Turmes bzw. der Trockenkammer gelangt.

So ist z.B. aus der US-A-2,280.073 eine Ausführungsform bekannt, bei welcher die Trockenluft über einen Zyklon eingeblasen wird. Die Zyklonströmung der Trockenluft im Zusammenhang mit einer Rotationszerstäubung des Feuchtgutes soll eine Trennung des getrockneten Grobgutes vom Trockengas durch die daran angreifende grössere Zentrifugalkraft bewirken. Der vor der koaxialen Trocknungslufteinlass- und -auslassöffnung angebrachte Rotationszerstäuber ist zugleich als Ventilator ausgebildet und unterstützt die absaugende Wirkung einer externen Pumpe. Zur Abtrennung des mit der Trockenluft mitgerissenen Feingutes sind zusätzlich in Absaugrichtung nach dem Ventilator aufwendige Filteranlagen oder dergleichen angebracht. Die beschriebene Vorrichtung ist produkt-spezifisch ausgelegt und relativ umständlich auf Produkte anderer Korngrössenverteilungen umrüstbar.

Es sind auch Sprühtrockner bekannt, bei denen die Abluft zentral über eine Art Schnorchel abgeführt wird, welcher radial in den unteren Bereich der Trocknungskammer ragt, oder axial am Boden installiert ist. Die Trennung des Grobgutanteiles vom Feingutanteil hängt dabei hauptsächlich von der Drallintensität des Trocknungsgases innerhalb der Trocknungskammer, sowie von den Strömungsverhältnissen um und beim Eintritt in die Abführleitung ab. Es sind z.B. aus der US-A-3,963,559, der GB-A-2,020,986 oder der DE-C-849,350 Ausführungsformen bekannt, bei denen zum Erzielen geeignete Strömungsverhältnisse zusätzliche Abdeckungen in Gestalt von Hüten oder ähnlichem über der Abführleitung angebracht sind. Die aus der CH-PS-374,972 bekannte Trennvorrichtung erzielt diesen Effekt durch einen hutförmig ausgebildeten Rotor in Kombination mit einem Stator. Wieder andere Ausführungsformen sehen im Bereich um die Abführleitung Tangentialdüsen vor um Strömungsverhältnisse zu schaffen, durch welche die in der Luft dispergierten Staubteilchen in Grob- und Feinanteil getrennt werden sollen.

Es sind auch Sprühtrockner wie z.B. der in der US-A-1,426.030 beschriebene bekannt, welche zur Trennung des Grobgutes von dem Trocknungsmedium Zyklone verwenden, wobei der mit der Trocknungsluft mitgeführte Feingutanteil des Produktes von neuem in die Trockenkammer geführt wird. Weitere derartige Sprühtrockner, die hauptsächlich zur Agglomeration eingesetzt werden, besitzen in der Decke der Trocknungskammer bzw. des Turmes zwei Ausgänge für die Abluft. Bei diesen Vorrichtungen hängt die Trennung von Grobgut und Feinanteil hauptsächlich von den mittleren axialen Strömungsgeschwindigkeit innerhalb der Trocknungskammer unter deren Decke ab.

All diesen Lösungen ist gemeinsam, dass zuviel Grobgutanteil (Gutkorn) mit dem Feinanteil ausgetragen wird. Dieser kann zwar durch eine nachgeschaltete Sichtung oder Siebung rückgewonnen werden, vergrössert

2

jedoch den Platzbedarf, macht zusätzliche Filter oder Siebe erforderlich und darüber hinaus besteht die Gefahr, dass das Produkt beispielsweise in einem Zyklon beschädigt wird, so dass aus Gutkorn Feinanteil wird. Eine Siebung schliesslich hat nur einen relativ schlechten Wirkungsgrad. Eine Lösung mit Tangential-Düsen innerhalb des Turmkonus beinhaltet die Gefahr einer Schädigung des Produktes in dem Auslaufkonus durch Abrasion, und der Abluftfilter muss um die rückgeführte Luftmenge grösser ausgelegt werden. Bei einer weiteren Lösung mit einem bewegbaren Hut beansprucht dieser relativ viel Platz innerhalb der Trocknungskammer, vermindert die für die Trocknung wichtige Fallhöhe und kann an seiner oberen Spitze mit auftreffendem Produkt verkrustet werden.

Die bekannten Vorrichtungen besitzen alle relativ grosse Abmessungen des Hutdurchmessers oder des Turmdurchmessers und verursachen damit einen grösseren Platzbedarf und entsprechend höhere Kosten. Sie sind meist produktspezifisch ausgelegt und wenn überhaupt möglich, nur schwer auf andere Korngrössenverteilungen umrüstbar.

Es besteht deshalb die Aufgabe, einen Sprühtrockner der eingangs erwähnten Art zu schaffen, bei welchem innerhalb der Trocknungskammer eine bessere Trenngrenze zwischen Gutkorn und Feinanteil erreicht werden kann, also ein grösserer Anteil des in der Trocknungskammer entstehenden Gutkornes in dieser verbleibt und aus dieser ausgetragen werden kann und eine Mitnahme von Gutkorn mit dem abgeführten Trocknungsgas und dem abgeführten Feingut vermindert werden kann. Dabei soll die Trocknungskammer möglichst kompakt und in ihrem Aufbau einfach sein und im Inneren befindliche Hüte und dergleichen sollen vermieden werden können. Ferner soll eine einfache nachträgliche Regelung oder Einstellung des Verhältnisses von Grobgutaustrag zu Feinanteil zur Anpassung an unterschiedliche Produkte möglich sein.

Die Lösung dieser Aufgabe besteht in einer Vorrichtung gemäss Kennzeichen des Patentanspruches 1. Bevorzugte Ausführungsformen ergeben sich aus den abhängigen Ansprüchen.

Nachstehend ist die Erfindung mit ihren ihr als wesentlich zugehörigen Einzelheiten anhand der Zeichnung in mehreren Ausführungsbeispielen noch näher beschrieben.

Es zeigt zum Teil schematisiert :

| | |
|---|---|
| Fig. 1 | den unteren Teil eines Turmes oder einer Trockenkammer eines Sprühtrockners im Axialschnitt, |
| Fig. 2 | eine weitere Ausführungsform in der der Fig. 1 entsprechenden Darstellungsform, |
| Fig. 3 | ein weiteres Ausführungsbeispiel eines Sprühtrockners und Agglomerators im Axialschnitt, |
| Fig. 4 | eine gegenüber Fig. 3 bezüglich der Abführrleitung für das Trocknungsgas und den mitgenommenen Feingutanteil abgewandelte Ausführungsform, |
| Fig. 5 | eine Detaildarstellung aus Fig. 4 in vergrössertem Massstab und |
| Fig. 6 | einen Schnitt gemäss der Linie VI-VI in Fig. 5. |

Bei den nachfolgend näher beschriebenen verschiedenen Sprühtrocknern werden trotz der jeweiligen Unterschiede übereinstimmend oder ähnlich wirkende Teile jeweils mit übereinstimmenden Bezugszeichen versehen.

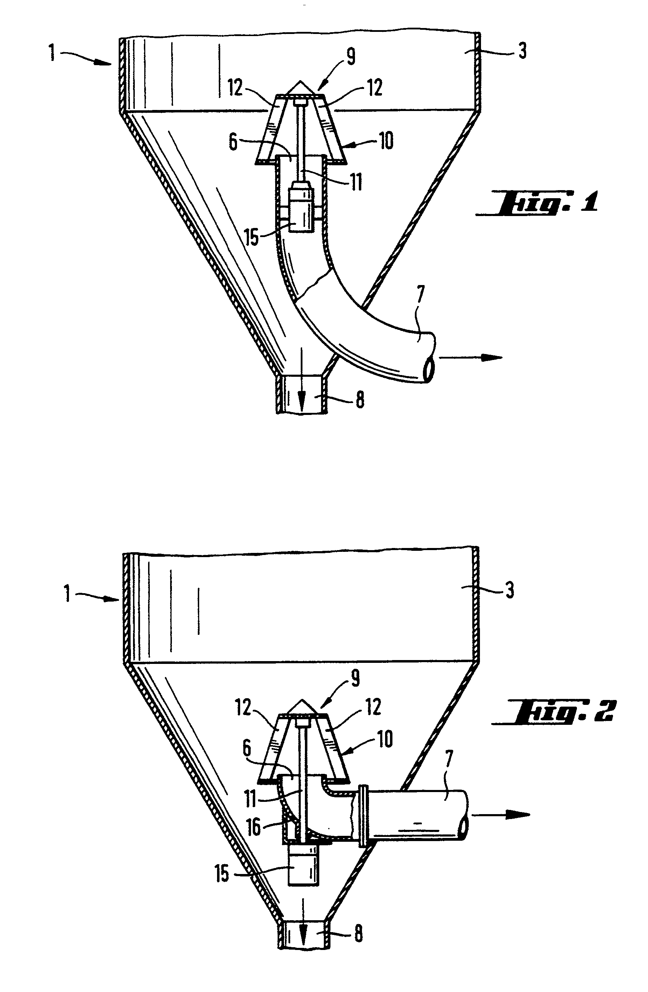

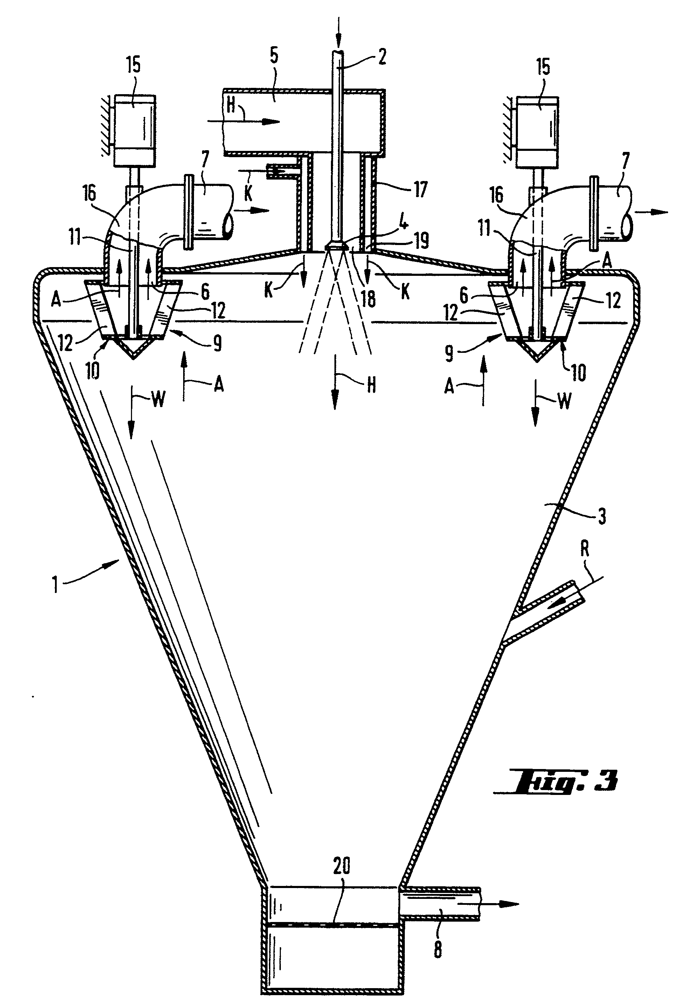

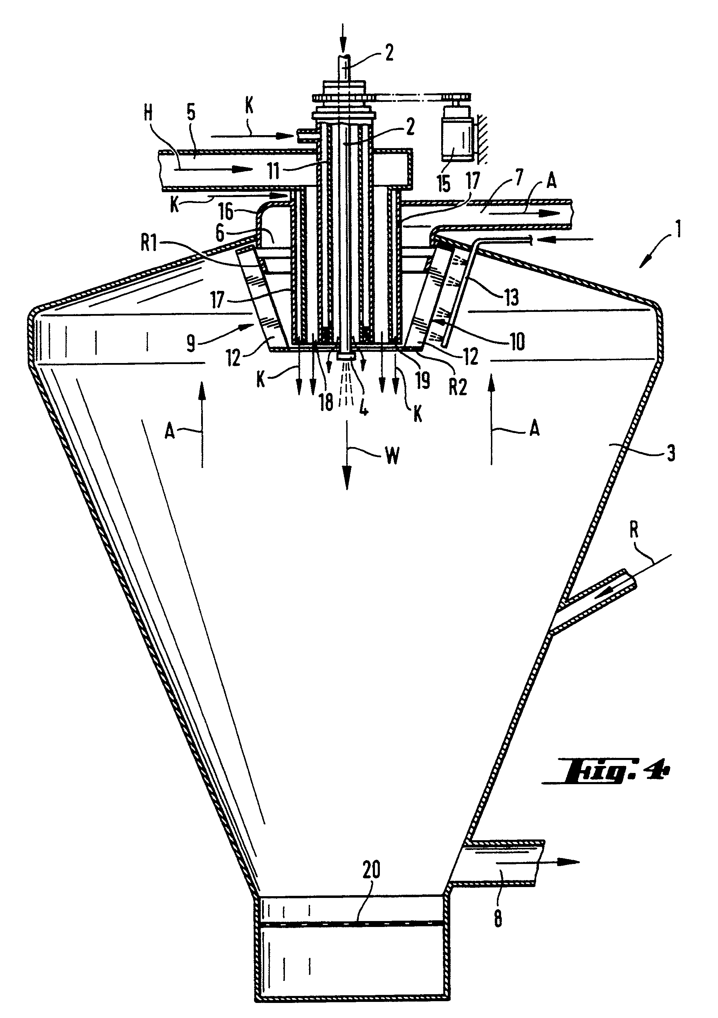

Die in Fig. 1 bis 4 dargestellten Sprühtrockner 1 dienen zur Herstellung von Pulvern, Agglomeraten oder dergleichen, indem pumpfähige Nassprodukte durch in Fig. 1 und 2 nicht dargestellte, jedoch in Fig. 3 bis 5 sichtbare Leitungen 2 einer Trocknungskammer 3 zugeführt werden, wobei am Austritt der Leitungen 2 jeweils eine Zerstäuber- oder Sprühvorrichtung 4 angeordnet ist. Ferner haben all diese Sprühtrockner 1 wenigstens einen Anschluss und Eintritt 5 für ein Trocknungsgas (Pfeil H), vorzugsweise für Heissluft oder Inertgas. Ausserdem befindet sich an den Trocknungskammern 3 in den Ausführungsbeispielen nach Fig. 1, 2 und 4 jeweils ein Anschluss und Eintritt 6 einer Abführrleitung 7 für das verbrauchte Trocknungsgas und mit diesem mitgeführtes Gut, während bei Fig. 3 zwei derartige Eintritte 6 in Abführrleitungen 7 vorgesehen sind, und ausserdem haben die Trocknungskammern 3 jeweils einen Pulveraustrag 8 für das in ihnen erzeugte Gutkorn.

In allen Ausführungsbeispielen ist vorgesehen, dass am Eintritt 6 der Abführrleitung(en) 7 für das verbrauchte Trocknungsgas und von diesem mitgeführtes Gut ein im ganzen mit 9 bezeichneter Windsichter mit einem rotierenden Schaufelrad 10 angeordnet ist. Die vom rotierenden Schaufelrad 10 des Windsichters 9 erzeugte Strömung (Pfeil W) ist der Absaugströmung (Pfeil A) entgegengerichtet, so dass der verbleibende Feingutaustrag mit der Strömung der Abluft in die Abluftleitung 7 gerichtet ist und der Grobgutaustrag in die Trocknungskammer 3 erfolgt. Dadurch wird auf überraschend einfache Weise der von der Abluft (Pfeil A) mitgenommene Grobgutanteil vermindert und somit die Ausbeute des Sprühtrockners 1 an solchem Grobgut oder Gutkorn vergrössert, während der mit der Abluft mitgenommene Gutanteil vermindert wird, so dass auch weniger Aufwand für dessen Wiedergewinnung und Rezirkulation erforderlich ist.

Derartige Windsichter und deren prinzipielle Wirkungsweise sind z.B. in einem Preprint der VDI-Gesellschaft Verfahrenstechnik und Chemieingenieurwesen zu einem Vortrag von Prof. Dr.-Ing. Kurt Leschonski (Lehrstuhl für Mechanische Verfahrenstechnik, Technische Universität Clausthal) im Maternus-Haus, Köln, vom 2. und 3. Dezember 1986, zum Thema "Technik der Gas/Feststoffströmung" beschrieben. Die Beschreibung des Windsichters 9 beschränkt sich daher auf die für die Erfindung wesentlichen Merkmale.

Das Schaufelrad 10 des Windsichters umfasst eine Anzahl von Schaufeln 12, welche gleichmässig am Umfang zweier im Abstand voneinander an einer gemeinsamen Antriebswelle 11 befestigten konzentrischen Ringe R1, R2 verteilt sind.

Die Schaufeln 12 des Schaufelrades 10 sind als Leisten oder gerade Blätter ausgebildet. Die Breite der Zwischenräume zwischen den einzelnen Schaufelblättern entspricht bevorzugt etwa der Breite der von den Schaufeln 12 verdeckten Bereiche des Umfanges. In Bezug auf die Drehrichtung des Schaufelrades 10 sind die leistenförmigen Schaufeln 12 ausgehend von den Befestigungspunkten an den Ringen gegenüber dem Ringradius nach hinten geneigt, wie in Fig. 6 dargestellt. Bevorzugt ist das Schaufelrad 10 konisch ausgebildet, mit dem umfanggrösseren Ring R1 unmittelbar vor dem Eintritt 6 in die Abführleitung 7. Der Innendurchmesser des Ringes R1 unmittelbar vor dem Eintritt 6 der Abführleitung 7 ist etwas grösser gewählt als der Durchmesser der Abführleitung 7. In diesem Bereich wird in erwünschter Weise dann die grösste Umfangsgeschwindigkeit der Schaufelblätter 12 und damit die grösste Zentrifugalkraft erreicht, so dass hier noch der restliche Grobgutanteil ausgeschleudert werden kann, obwohl die Menge an Grobgutanteil über die Höhe des Sichters 9 bereits deutlich vermindert ist. Auf den zweiten durchmesserkleineren Ring R2 des Schaufelrades 10 kann noch, so wie in Fig. 1 bis Fig. 3 dargestellt, ein Abprallkonus aufgesetzt sein.

Die Grösse des Schaufelrades 10 (Durchmesser, Höhe) und die Anzahl der Schaufeln 12 richtet sich nach der Art des zu sichtenden Gutes, nach dem gewünschten Durchsatz, und der Dimensionierung der Abführleitung(en) 6.

Bei konischen Schaufelrädern wird der kleinere Durchmesser von etwa 40% bis 70% des grösseren gewählt. Ueberlicherweise werden Schaufelräder mit einem grösseren Durchmesser von etwa 0,2 m bis etwa 3,0 m und einer Höhe, die etwa dem grösseren Durchmesser entspricht, eingesetzt.

Die Anzahl der Schaufeln 12 bewegt sich üblicherweise in der Grössenordnung von etwa 5 bis etwa 50 Stk. Die Tiefe (Breite) der Schaufeln 12 ist mitentscheidend für die Trenngrenze des Sichters 9 und wird üblicherweise von etwa 20 mm bis etwa 200 mm gewählt.

Die Antriebswelle 11 des rotierenden Schaufelrades 10 des Windsichters 9 stimmt dabei in allen Ausführungsbeispielen mit der Achse der Abführleitung 7 an deren Eintritt 6 überein. In der Regel erfolgt nämlich der Feingutaustrag eines Windsichters in seiner Axialrichtung, während das Grobgut bei einer solchen Windsichtung durch die Fliehkraft und teils durch Abprallen von den Schaufeln 12 radial abgeführt wird.

An die Antriebswelle 11 des Schaufelrades 10 ist ein Motor 15 angekuppelt, wodurch die Drehzahl des rotierenden Schaufelrades 10 einstellbar, vorzugsweise regelbar ist, so dass eine gute Anpassung von Absaugströmung und Gegenströmung an den jeweiligen gewünschten Grobgutanteil und das jeweils bearbeitete Produkt möglich ist.

Bei der Ausführungsform nach Fig. 1 befindet sich der Antriebsmotor 15 für die Antriebswelle 11 des Sichters 9 innerhalb der Abführleitung 7, die über eine Biegung mit relativ grossem Krümmungsradius aus der Trocknungskammer 3 herausführt. Bei den Ausführungsformen nach Fig. 2 bis 5 ist vorgesehen, dass die Abführleitung 7 hinter ihrem Eintritt 6 einen Umlenkkrümmer 16 aufweist und die Antriebswelle 11 für das rotierende Schaufelrad 10 durch diesen Krümmer 16 und dessen Aussenwand mit dem grösseren Krümmungsradius verläuft und der Antriebsmotor 15 ausserhalb des Krümmers 16 angeordnet ist. Dort ist er gut zugänglich, so dass seine Anschlüsse problemlos sind und eine eventuell erforderliche Kühlung des Motors sowie auch seine Regelung einfach vonstatten gehen können. Dabei ist diese Anordnung sowohl bei der Ausführungsform nach Fig. 2 mit einem im unteren Bereich der Trockenkammer 3 angeordneten Eintritt 6 in eine Abführleitung 7 möglich, bei welcher dann der Motor 15 innerhalb der Trocknungskammer 3 oder über entsprechende Transmissionen gegebenenfalls auch ausserhalb angeordnet ist, als auch bei der Ausführungsform nach Fig. 3, wo die Krümmer 16 der beiden Abführleitungen 7 sich weitgehend oberhalb und ausserhalb der Trocknungskammer 3 befinden, so dass die Antriebsmotoren 15 dort in jedem Falle ausserhalb der Trocknungskammer 3 angeordnet sind.

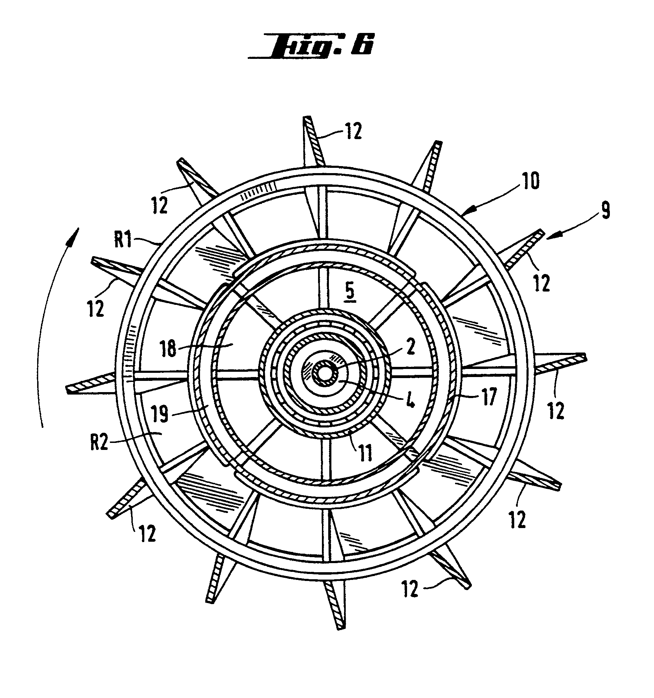

In Fig. 5 erkennt man eine Pressluftleitung 13, die zu dem jeweiligen Windsichter 9 führt und eine oder mehrere gegen den Bereich der Schaufeln 12 gerichtete Austrittsdüsen 14 als Reinigungsdüsen für die Schaufeln 12 und das Schaufelrad 11 aufweist. Somit kann während des Betriebs und bei Wechsel des zu trocknenden Nassproduktes eine Reinigung des Sichters durchgeführt werden, was bei allen Ausführungsbeispielen möglich ist.

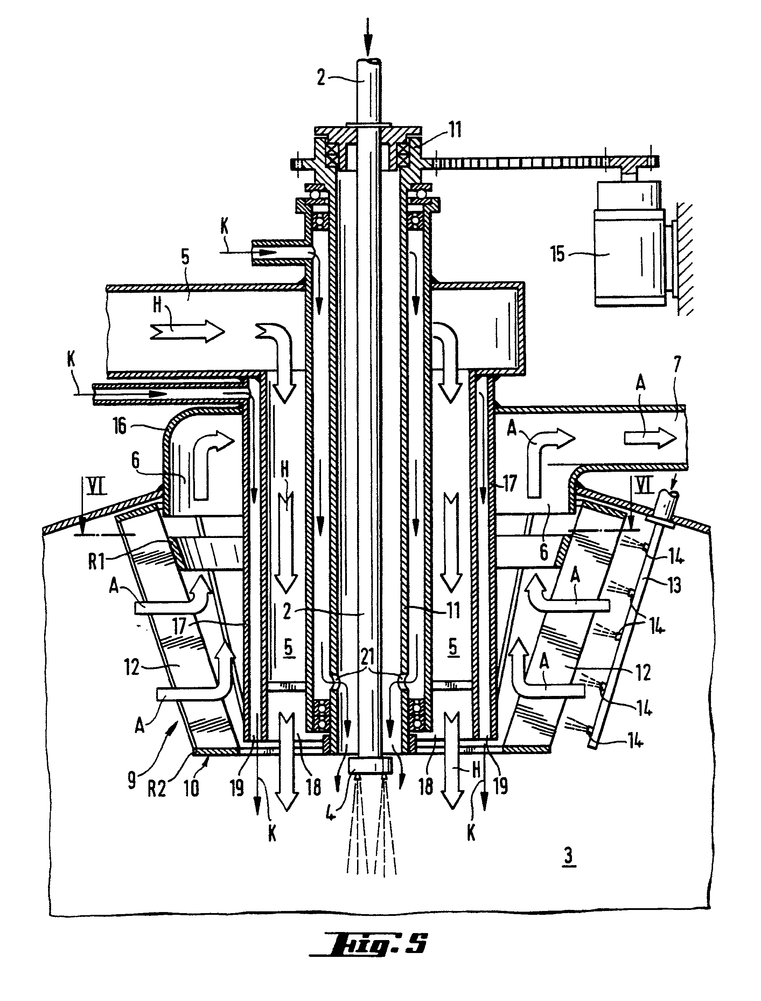

Bei dem Ausführungsbeispiel gemäss Fig. 4 und 5 ist in besonderer Weise das Zuführrohr 2 für das Nassgut innerhalb der Zuführleitung 5 für das Trocknungsgas angeordnet und durchsetzt konzentrisch den Eintritt 6 in die Abführleitung 7 und ragt dabei ausserdem etwas über die axiale Höhe bzw. Länge des an diesem Eintritt 6 befindlichen Schaufelrades 10 des Windsichters 9 in das Innere der Trocknungskammer 3. Diese hat also für den Eintritt des Nassgutes und die Trocknungsluft sowie deren Austritt nur noch eine einzige Oeffnung im oberen Bereich. Daraus resultiert bei gleicher Leistung eine Verkleinerung des Volumens der gesamten Trocknungskammer 3 bis etwa um einen Faktor 3. Zugleich wird dadurch die Produktverweilzeit im Trockner verringert, was sich auf die Qualität des Produktes positiv auswirkt.

Aus der Detaildarstellung in Fig. 5 ist ersichtlich, dass das Zuführrohr 2 für das Nassgut, die Zuführleitung 5 für das Trocknungsgas und die Antriebs- bzw. Drehachse 11 für das Schaufelrad 10 des Windsichters 9 sowie das Schaufelrad 10 selbst koaxial zueinander angeordnet sind und die die Antriebswelle 11 und die Zufuhr des Nassgutes in sich aufnehmende Zuführleitung 5 für das Trocknungsgas etwa im Zentrum des Eintrittes 6 in die Abführleitung 7 in die Trocknungskammer 3 eintritt. Dies ergibt eine platzsparende und kompakte Lösung, bei der ausserdem erwartet werden kann, dass keine Produktteilchen an der Wandung oder Decke des Trocknungsraumes 3 hängen bleiben, selbst wenn dieser in einer kleineren Abmessung hergestellt wird. Dabei erkennt man vor allem in Fig. 5, aber auch in Fig. 4 noch, dass die Zuführleitung 5 für das Trocknungsgas einen sie umgebenden Mantel 17 zur Zufuhr von Kaltluft bzw. Inertgas aufweist und dass an der Austrittsöffnung 18 der Zuführleitung 5 für das Trocknungsgas ein diese umschliessender Ringspalt 19 für den Austritt der Kaltluft und zur Abschirmung des hier in den Trocknungsraum eintretenden Trocknungsgases von dem abzuführenden Trocknungsgas vorgesehen ist. Somit wird sichergestellt, dass das zu trocknende Nassgut nicht vorzeitig in den Windsichter 9 gelangt. Der Ringraum zwischen der Zuführleitung 5 und Drehachse 11 wird mit Kaltluft bzw. Inertgas gespült. Diese Luft (Pfeil K) strömt unten über Durchbrüche 21 in den Düsenraum aus und kühlt das untere Lager.

Die Zufuhr des Nassgutes und des Trockengases sowie die koaxiale Antriebswelle 11 des Schaufelrades 10 und die Eintrittsöffnung 6 in die Abführleitung 7 sind vorzugsweise auch koaxial zur Achse der Trockenkammer 3 angeordnet, befinden sich also an deren höchster Stelle oberhalb des Gutkornaustrages 8 bzw. eines Wirbelbettes 20.

Bei den fluidisierten Sprühtrocknern oder Agglomeratoren nach Fig. 3 bis 5 wird der Feinanteil seitlich in die Trocknungskammer rückgeführt (Pfeil R).

Es sei noch erwähnt, dass die Blätter 12 des Schaufelrades 10 aus Kunststoff, vorzugsweise aus Polytetrafluoräthylen bestehen können oder damit überzogen sein können, um Anbackungen von Gut zu vermeiden und leicht gereinigt werden können.

Insgesamt ergibt sich ein Sprühtrockner, bei welchem eine wesentlich bessere Trennung der in ihm anfallenden Gutkornanteile und Feinkornanteile schon innerhalb der Trocknungskammer 3 möglich sind, also eine entsprechende Nachbearbeitung des mit der Trockenluft ausgetragenen Gutanteiles vermindert oder vermieden werden kann. Gleichzeitig werden aufwendige Einbauten oder komplizierte Formen der Trocknungskammer mit Ringkanälen, Zyklonen und dergleichen vermieden, so dass trotz des am Austritt der Trocknungsluft vorgesehenen Windsichters der Gesamtaufwand des Sprühtrockners gegenüber herkömmlichen Bauformen vermindert wird, zumal für gleiche Leistung zumindest in vielen Fällen auch die Trocknungskammer 3 kleiner gebaut werden kann.

## Patentansprüche

1. Sprühtrockner zur Herstellung von Pulvern, Agglomeraten oder dergleichen durch Trocknen vor pumpfähigen Produkten, mit einer Trocknungskammer (3), mit einer Zerstäuber- oder Sprühvorrichtung (4), mit wenigstens einem Anschluss und Eintritt (5) von Trocknungsgas, vorzugsweise Heissluft, in die Trocknungskammer, mit einem Pulveraustrag und mit wenigestens einer Abführleitung für das Trocknungsgas, dadurch gekennzeichnet, dass am Eintritt (6) der Abführleitung(en) (7) für verbrauchtes Trocknungsgas ein Windsichter (9) mit einem rotierenden Schaufelrad (10) angeordnet ist, dessen Wirkung der Absaugströmung entgegengerichtet ist.

2. Sprühtrockner nach Anspruch 1, dadurch gekennzeichnet, dass die Drehzahl des rotierenden Schaufelrades (10) einstellbar, vorzugsweise regelbar ist.

3. Sprühtrockner nach Anspruch 1 oder 2, dadurch gekennzeichnet, dass die Antriebswelle (11) des rotierenden Schaufelrades (10) des Windsichters (9) mit der Achse der Abführleitung (7) an deren Eintritt (6) übereinstimmt.

4. Sprühtrockner nach einem der Ansprüche 1 bis 3, dadurch gekennzeichnet, dass zwischen den einzelnen Schaufelblättern (12) ein Zwischenraum freigelassen ist.

5. Sprühtrockner nach einem der Ansprüche 1 bis 4, dadurch gekennzeichnet, dass das Schaufelrad (10) eine Anzahl von Schaufeln (12) umfasst, welche gleichmässig am Umfang wenigstens zweier im Abstand voneinander an der gemeinsamen Antriebswelle (11) befestigten Ringe (R1, R2) verteilt sind.

6. Sprühtrockner nach Anspruch 5, dadurch gekennzeichnet, dass die Schaufeln (12) des Schaufelrades (10) als Leisten oder insbesondere gerade Blätter ausgebildet sind.

7. Sprühtrockner nach Anspruch 5 oder 6, dadurch gekennzeichnet, dass die Schaufeln (12), in Drehrichtung des Schaufelrades (10) gesehen, ausgehend von ihren Befestigungspunkten an den Ringen (R1, R2) gegenüber dem Scheibenradius nach hinten geneigt sind.

8. Sprühtrockner nach einem der Ansprüche 5 bis 7, dadurch gekennzeichnet, dass die Anzahl der Schaufeln (12) von etwa 5 bis etwa 50 Stück beträgt.

9. Sprühtrockner nach einem der Ansprüche 5 bis 8, dadurch gekennzeichnet, dass die Tiefe der Schaufelblätter (12) von etwa 20 mm bis etwa 200 mm beträgt.

10. Sprühtrockner nach einem der Ansprüche 5 bis 9, dadurch gekennzeichnet, dass das Schaufelrad (10) konisch ausgebildet ist, wobei sein grösserer Umfang unmittelbar vor dem Eintritt (6) in die Abführleitung (7) liegt.

11. Sprühtrockner nach Anspruch 10, dadurch gekennzeichnet, dass der grössere Durchmesser des Schaufelrades (12) von etwa 0,2 m bis 3,0 m beträgt.

12. Sprühtrockner nach Anspruch 11, dadurch gekennzeichnet, dass die Höhe des Schaufelrades (12) etwa mit dem grösseren Durchmesser übereinstimmt.

13. Sprühtrockner nach einem der Ansprüche 10 bis 12, dadurch gekennzeichnet, dass der kleinere Durchmesser des Schaufelrades (10) von etwa 40% bis etwa 70% des grösseren bemisst.

14. Sprühtrockner nach einem der vorhergehenden Ansprüche, dadurch gekennzeichnet, dass das Schaufelrad (10) einen grösseren Durchmesser aufweist, als die Abführleitung (7) an ihrem Eintritt (6).

15. Sprühtrockner nach einem der Ansprüche 1 bis 14, dadurch gekennzeichnet, dass eine Pressluftleitung (13) oder dergleichen zu dem jeweiligen Windsichter (9) führt, die wenigstens eine gegen den Bereich der Schaufeln (12) des Schaufelrades gerichtete Austrittsdüse (14), vorzugsweise mehrere etwa parallele Reinigungsdüsen aufweist.

16. Sprühtrockner nach einem der Ansprüche 1 bis 15, dadurch gekennzeichnet, dass die Abführleitung (7) an ihrem Eintritt (6) einen Umlenk-Krümmer (16) aufweist und dass die Antriebswelle (11) für das rotierende Schaufelrad (10) durch diesen Krümmer (16) und dessen Aussenwand verläuft und der Antriebsmotor (15) ausserhalb des Krümmers (16) angeordnet ist.

17. Sprühtrockner nach einem der Ansprüche 1 bis 16, dadurch gekennzeichnet, dass das Zuführrohr (2) für das Nassgut innerhalb einer Zuführleitung (5) für das Trocknungsgas, vorzugsweise Heissluft, angeordnet ist und etwa konzentrisch den Eintritt (6) in die Abführleitung (7) durchsetzt und wenigstens etwa über die axiale Höhe des Schaufelrades (10) in das Innere der Trocknungskammer (3) ragt.

18. Sprühtrockner nach einem der Ansprüche 1 bis 17, dadurch gekennzeichnet, dass das Zuführrohr (2) für das Nassgut, die Zuführleitung (5) für das Trocknungsgas und die Antriebswelle (11) für das Schaufelrad (10) des Windsichters (9) sowie das Schaufelrad (10) selbst koaxial zueinander angeordnet sind und die die Antriebsachse (11) und die Zufuhr des Nassgutes in sich aufnehmende Zuführleitung (5) für das Trocknungsgas etwa im Zentrum des Eintrittes (6) in die Abführleitung (7) in die Trocknungskammer (3) eintritt.

19. Sprühtrockner nach einem der Ansprüche 1 bis 18, dadurch gekennzeichnet, dass die Zuführleitung (5) für das Trocknungsgas einen sie umgebenden Mantel (17) zur Zufuhr von Kaltluft aufweist, und dass an der Austrittsöffnung (18) der Zuführleitung (5) für das Trocknungsgas ein diese umschliessender Ringspalt (19) für den Austritt der Kaltluft und zur Abschirmung des eintretenden Trocknungsgases von dem abzuführenden Trocknungsgas vorgesehen ist.

20. Sprühtrockner nach einem der vorhergehenden Ansprüche, dadurch gekennzeichnet, dass die Zufuhr des Nassgutes und des Trocknungsgases sowie die koaxial dazu angeordnete Antriebswelle (11) des Schaufelrades (10) und die Eintrittsöffnung (6) in die Abführleitung (7) koaxial zur Achse der Trockenkammer (3) angeordnet ist.

## Claims

1. A spray dryer for the preparation of powders, agglomerates or the like, by the drying of pumpable products, with a drying chamber (3), with an atomiser or spraying apparatus (4), with at least one connection and inlet (5) for drying gas, preferably hot air, into the drying chamber, with a powder discharge outlet and with at least one discharge line for the drying gas, characterised in that a wind sifter means (9) with a rotating bucket wheel (10) is located at the inlet (6) of the discharge line(s) (7) for spent drying gas, the action of which means is against the flow of exhaust.

2. A spray dryer according to Claim 1, characterised in that the speed of the rotating bucket wheel (10) is variable, preferably adjustable.

3. A spray dryer according to Claim 1 or 2, characterised in that the drive shaft (11) of the rotating bucket wheel (10) of the wind sifter means (9) coincides with the axis of the discharge line (7) at its inlet (6).

4. A spray dryer according to one of Claims 1 to 3, characterised in that an intermediate space is left free between the individual bucket blades (12).

5. A spray dryer according to one of Claims 1 to 4, characterised in that the bucket wheel (10) comprises a number of blades (12) which are distributed uniformly over the circumference of at least two rings (R1, R2) mounted spaced apart on the common drive shaft (11).

6. A spray dryer according to Claim 5, characterised in that the blades (12) of the bucket wheel (10) are formed as ridges or in particular as straight blades.

7. A spray dryer according to Claim 5 or 6, characterised in that the blades (12), as viewed in the direction of rotation of the bucket wheel (10), are inclined rearward relative to the radius of the disc beginning at their points of attachment to the rings (R1, R2).

8. A spray dryer according to one of Claims 5 to 7, characterised in that the number of blades (12) is from about 5 to about 50.

9. A spray dryer according to one of Claims 5 to 8, characterised in that the depth of the bucket blades (12) is approximately 20 mm to approximately 200 mm.

10. A spray dryer according to one of Claims 5 to 9, characterised in that the bucket wheel (10) is conical, with its larger circumference being located directly in front of the inlet (6) into the discharge line (7).

11. A spray dryer according to Claim 10, characterised in that the larger diameter of the bucket wheel (12) is approximately 0.2 m to 3.0 m.

12. A spray dryer according to Claim 11, characterised in that the height of the bucket wheel (12) coincides approximately with the larger diameter.

13. A spray dryer according to one of Claims 10 to 12, characterised in that the smaller diameter of the bucket wheel (10) is approximately 40% to approximately 70% of the larger diameter.

14. A spray dryer according to one of the preceding Claims, characterised in that the bucket wheel (10) has a larger diameter than the discharge line (7) at its inlet (6).

15. A spray dryer according to one of Claims 1 to 14, characterised in that a compressed air line (13) or the like leads to the respective wind sifter means (9), which line has at least one outlet nozzle (14), preferably a plurality of approximately parallel cleaning nozzles, directed against the area of the blades (12) of the bucket wheel.

16. A spray dryer according to one of Claims 1 to 15, characterised in that the discharge line (7) has at its inlet (6) a deflecting elbow (16) and that the drive shaft (11) for the rotating bucket wheel (10) runs through this elbow (16) and its outer wall and the drive motor (15) is located outside the elbow (16).

17. A spray dryer according to one of Claims 1 to 16, characterised in that the feeder tube (2) for the wet material is located within a feeder line (5) for the drying gas, preferably hot air, and passes approximately concentrically through the inlet (6) into the discharge line (7) and projects at least approximately over the axial height of the bucket wheel (10) into the interior of the drying chamber (3).

18. A spray dryer according to one of Claims 1 to 17, characterised in that the feeder tube (2) for the wet material, the feeder line (5) for the drying gas and the drive shaft (11) for the bucket wheel (10) of the wind sifter means (9) and also the bucket wheel (10) itself are arranged coaxially relative to one another and the feeder line (5) for the drying gas which includes the drive axle (11) and the feed of the wet material enters the drying chamber (3) approximately in the centre of the inlet (6) into the discharge line (7).

19. A spray dryer according to one of Claims 1 to 18, characterised in that the feeder line (5) for the drying gas has a jacket (17) surrounding it for feeding cold air, and that at the exit opening (18) of the feeder line (5) for the drying gas an annular gap (19) which surrounds it is provided for the cold air to exit and for shielding the incoming drying gas from the drying gas which is to be discharged.

20. A spray dryer according to one of the preceding Claims, characterised in that the feed of the wet material and of the drying gas and also the drive shaft (11) of the bucket wheel (10) arranged coaxially thereto and the inlet opening (6) into the discharge line (7) are arranged coaxially relative to the axis of the drying chamber (3).

**Revendications**

1. Dispositif de séchage par atomisation pour la fabrication de poudres, d'agglomérats ou de matières analogues par séchage de produits pompables, ce dispositif comportant une chambre (3) de séchage, un dispositif (4) de pulvérisation ou d'atomisation, au moins un raccord et une entrée (5) du gaz servant au séchage, avantageusement de l'air chaud, dans la chambre de séchage, une sortie de poudre et au moins un conduit d'échappement du gaz de séchage, dispositif caractérisé en ce qu'à l'entrée (6) du ou des conduit(s) (7) d'échappement du gaz ayant servi au séchage, est disposé un séparateur pneumatique (9) comportant une roue(10) à ailettes, rotative, dont l'action est dirigée dans le sens contraire de celui de l'écoulement d'aspiration.

2. Dispositif de séchage par atomisation selon la revendication 1, caractérisé en ce que la vitesse de rotation de la roue (10) à ailettes, rotative, peut être ajustée, avantageusement régulée.

3. Dispositif de séchage par atomisation selon la revendication 1 ou 2, caractérisé en ce que l'arbre (11) d'entraînement de la roue (10) à ailettes, rotative, du séparateur pneumatique (9) coïncide avec l'axe du conduit (7) d'évacuation d'échappement, à l'entrée (6) de ce conduit.

4. Dispositif de séchage par atomisation selon l'une des revendications 1 à 3, caractérisé en ce qu'un espace intermédiaire est laissé libre entre les diverses ailettes ou pales (12) de la roue (10).

5. Dispositif de séchage par atomisation selon l'une des revendications 1 à 4, caractérisé en ce que la roue (10) comporte un certain nombre de pales ou ailettes (12) qui sont uniformément réparties à la périphérie d'au moins deux anneaux (R1, R2) fixés, à une certaine distance l'un de l'autre, sur l'arbre (11) d'entraînement commun.

6. Dispositif de séchage par atomisation selon la revendication 5, caractérisé en ce que les pales ou ailettes (12) de la roue (10) ont la forme de languettes ou notamment de lames droites.

7. Dispositif de séchage par atomisation selon la revendication 5 ou 6, caractérisé en ce que les ailettes (12), vues dans le sens de rotation de la roue (10), sont, à partir de leurs points de fixation sur les anneaux (R1, R2), inclinées vers l'arrière par rapport au rayon des disques.

8. Dispositif de séchage par atomisation selon l'une des revendications 5 à 7, caractérisé en ce que le nombre des ailettes (12) est compris entre environ 5 et environ 50.

9. Dispositif de séchage par atomisation selon l'une des revendications 5 à 8, caractérisé en ce que la profondeur des lames ou ailettes (12) est d'environ 20 mm à environ 200 mm.

10. Dispositif de séchage par atomisation selon l'une des revendications 5 à 9, caractérisé en ce que la roue (10) a une forme conique, sa plus grande périphérie étant située directement devant l'entrée (6) du conduit (7) d'échappement.

11. Dispositif de séchage par atomisation selon la revendication 10, caractérisé en ce que le plus grand diamètre de la roue (10) se situe entre environ 0,2 m et 3,0 m.

12. Dispositif de séchage par atomisation selon la revendication 1, caractérisé en ce que la hauteur de la roue (10) coïncide approximativement avec son plus grand diamètre.

13. Dispositif de séchage par atomisation selon l'une des revendications 10 à 12, caractérisé en ce que le plus petit diamètre de la roue (10) représente environ 40% à environ 70% de son plus grand diamètre.

14. Dispositif de séchage par atomisation selon l'une des revendications précédentes, caractérisé en ce que la roue (10) présente un plus grand diamètre que l'entrée (6) du conduit (7) d'évacuation ou d'échappement.

15. Dispositif de séchage par atomisation selon l'une des revendications 1 à 14, caractérisé en ce qu'un conduit (13) d'air comprimé ou analogue conduit à chaque séparateur pneumatique (9), lequel présente au moins une buse (14) de sortie, avantageusement plusieurs buses de nettoyage, approximativement parallèles, dirigées vers la zone des lames ou pales (12) de la roue à ailettes.

16. Dispositif de séchage par atomisation selon l'une des revendications 1 à 15, caractérisé en ce que le conduit (7) d'échappement présente à son entrée (6) un raccord coudé (16), et en ce que l'arbre (11) d'entraînement de la roue (10) à ailettes rotative passe par ce coude (16) et traverse la paroi extérieure de celui-ci et est associé au moteur (15) d'entraînement situé à l'extérieur du coude (16).

17. Dispositif de séchage par atomisation selon l'une des revendications 1 à 16, caractérisé en ce que le tube (2) d'alimentation en la matière humide est disposé à l'intérieur d'un conduit (5) d'alimentation en gaz de séchage, avantageusement de l'air chaud, et ce tube traverse presque concentriquement l'entrée (6) du conduit (7) d'échappement et pénètre, au moins approximativement sur la hauteur axiale de la roue (10) à ailettes, à l'intérieur de la chambre (3) de séchage.

18. Dispositif de séchage par atomisation selon l'une des revendications 1 à 17, caractérisé en ce que le tube (2) d'alimentation en matière humide, le conduit (5) d'alimentation en gaz de séchage et l'arbre (11) d'entraînement de la roue (10) à ailettes du séparateur pneumatique (9) ainsi que la roue (10) à ailettes elle-même sont disposés coaxialement l'un par rapport à l'autre, et en ce que le conduit (5) d'alimentation en gaz de séchage, qui loge l'arbre ou axe (11) d'entraînement et reçoit l'acheminement de la matière humide, pénètre, à peu près au centre de l'entrée (6) du conduit (7) d'évacuation ou d'échappement, dans la chambre (3) de séchage.

19. Dispositif de séchage par atomisation selon l'une des revendications 1 à 18, caractérisé en ce que le conduit (5) d'alimentation en gaz de séchage présente une enveloppe (17) qui l'entoure pour acheminer du gaz froid, et en ce que, à l'ouverture (18) de sortie du conduit (5) d'alimentation en gaz de séchage est prévue une fente annulaire (19), entourant le conduit (5), destinée à la sortie de l'air froid et destinée à protéger et à séparer le gaz, qui arrive pour sécher, du gaz ayant servi au séchage et qu'il faut évacuer.

20. Dispositif de séchage par atomisation selon l'une des revendications précédentes, caractérisé en ce que l'arrivée de la matière humide et du gaz pour séchage, ainsi que l'arbre (11) d'entraînement de la roue (10), qui est coaxial à cette arrivée, ainsi que l'ouverture (6) d'entrée dans le conduit (7) d'échappement sont disposés coaxialement à l'axe de la chambre (3) de séchage.

*Fig. 1*

*Fig. 2*

Fig. 3

**Fig. 4**

**Fig. 5**

## Fig. 6